# EUROPEAN PATENT APPLICATION

(11) **EP 4 717 727 A1**
(43) Date of publication of application: **01.04.2026**
(21) Application number: 25204527.3
(22) Date of filing: 25.09.2025
(51) Int. Cl.: C08J 3/22, C08J 3/16, C08J 3/12, B60C 1/00, C08K 3/36, C08K 9/06, C08L 7/02, C08L 9/08, C08L 15/00, C08L 21/02

(54) **SILICA-NATURAL RUBBER MASTERBATCH PROCESS AND MASTERBATCH**

(30) Priority: 30.09.2024 US 202418901551
(71) Applicant: The Goodyear Tire & Rubber Company, Akron, OH 44316 (US)
(72) Inventor: YAN, Yuan-Yong, Akron, 44316 (US); ATTAREB, Gamil Gamal, Cuyahoga Falls, 44221 (US); HAHN, Bruce Raymond, Hudson, 44210 (US); MA, Liqing, Uniontown, 44685 (US)
(74) Representative: Kutsch, Bernd

(57) **Abstract**

A method for making a masterbatch material comprising a surface-modified silica and rubber latex is disclosed. The method comprises admixing the surface-modified silica with water and ultrasonicating the surface-modified silica and water to produce a silica solution; admixing the silica solution with the rubber latex to obtain a second solution; and removing water from the second solution to obtain a masterbatch material. The surface-modified silica comprises fewer surface-exposed hydrogen bonding groups than an otherwise identical unmodified silica. Also disclosed is such a masterbatch material and its use in a cured or uncured rubber composition for use in an article or tire.

## Description

### BACKGROUND

Compounding of natural rubber and silica presents numerous challenges including batch-to-batch variations, high compound viscosities, and changing of masterbatch properties during storage. It would be desirable to have a process for dispersing silica in a natural rubber (NR) or other rubber matrix that would ensure uniformity among different batches, that would promote viscosities during mixing that are compatible with existing machinery, and that would allow storage of masterbatches without changes in properties. These needs and other needs are satisfied by the present invention.

### SUMMARY

The invention relates to a method in accordance with claim 1, to a masterbatch in accordance with claim 11, to an uncured rubber composition in accordance with claim 13, to a cured rubber composition in accordance with claim 14 and to an article or tire in accordance with claim 15.

Dependent claims refer to preferred embodiments of the invention.

In accordance with the purpose(s) of the present invention, as embodied and broadly described herein, the invention, in one aspect, relates to a method for preparing a masterbatch comprising natural rubber or another rubber and silica. In one aspect, the silica undergoes chemical treatment or another treatment to reduce the ability of silica particles to form hydrogen bonds. In a further aspect, the silica is then mixed with water and ultrasonically vibrated to generate a milk-like silica solution. In a still further aspect, the milk-like silica solution can then be mixed with a natural rubber latex or other rubber latex, achieving effective dispersion of the silica in the rubber matrix. Dewatering and/or drying the silica solution and rubber matrix creates a masterbatch material that can be used immediately in the production of cured rubber articles or that can be stored for future use without degradation or separation. Also disclosed are masterbatch materials and rubber articles such as, for example, tires, made using the masterbatch materials.

Other systems, methods, features, and advantages of the present invention will be or become apparent to one with skill in the art upon examination of the following drawing and detailed description. All optional and preferred features and modifications of the described embodiments are usable in all aspects of the invention taught herein. Furthermore, the individual features of the dependent claims, as well as all optional and preferred features and modifications of the described embodiments are combinable and interchangeable with one another.

### BRIEF DESCRIPTION OF THE DRAWINGS

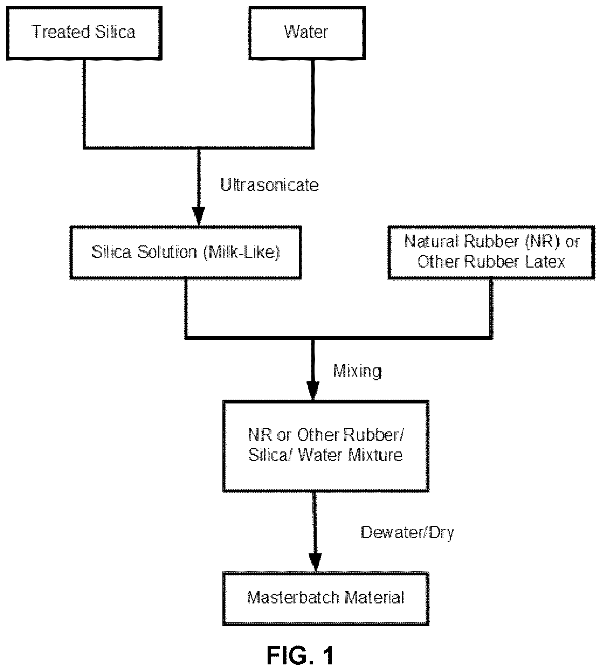

FIG. 1 is a flow chart of the disclosed process.

### DETAILED DESCRIPTION OF PREFERRED EMBODIMENTS OF THE INVENTION

The recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

### Definitions

As used herein, "comprising" is to be interpreted as specifying the presence of the stated features, integers, steps, or components as referred to, but does not preclude the presence or addition of one or more features, integers, steps, or components, or groups thereof. Further, the term "comprising" is intended to include examples and aspects encompassed by the terms "consisting essentially of" and "consisting of." Similarly, the term "consisting essentially of" is intended to include examples encompassed by the term "consisting of.

As used in the specification and the appended claims, the singular forms "a," "an" and "the" include plural referents unless the context clearly dictates otherwise. Thus, for example, reference to "a filler," "a curing accelerator," or "an alcohol ether," include, but are not limited to, mixtures or combinations of two or more such fillers, curing accelerators, or alcohol ethers, and the like.

It should be noted that ratios, concentrations, amounts, and other numerical data can be expressed herein in a range format. It will be further understood that the endpoints of each of the ranges are significant both in relation to the other endpoint, and independently of the other endpoint.

As used herein, the terms "preferably", "optional" or "optionally" means that the subsequently described event or circumstance can or cannot occur, and that the description includes instances where said event or circumstance occurs and instances where it does not.

As used herein, the term "phr" as used herein, and according to conventional practice, refers to "parts by weight of a respective material per 100 parts by weight of rubber or elastomer". In general, using this convention, a rubber or elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers / elastomers in the composition results in total in 100 parts of rubber. For example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. he terms "rubber" and "elastomer" may also be used herein interchangeably, unless indicated otherwise.

As used herein, the term "uncured rubber composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "cured rubber composition" refers to a rubber composition obtained by taking an uncured rubber composition and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

As used herein, "surface-modified silica" refers to a silica product obtained through a process of chemically or physically modifying an untreated silica, in order to alter the properties, such as hydrogen bonding properties, of the silica. In one aspect, untreated silcas may have numerous exposed hydroxyl and/or other chemical groups that can participate in hydrogen bonding, which can impact dispersal in water and which may cause clumping or settling of the silica in aqueous solutions, suspensions, and/or slurries. In another aspect, and without wishing to be bound by theory, modifying the surface of the silica can allow stable dispersal of the silica in water, which can, in turn, aid in mixing the aqueous silica solution with natural rubber latex or another rubber latex, while reducing viscosity and enabling easier mixing.

Unless otherwise specified, temperatures referred to herein are based on atmospheric pressure (i.e. one atmosphere).

### Method for Making a Masterbatch Material

In one aspect, disclosed herein is a method for making a masterbatch material including a surface-modified silica and a rubber latex, the method including at least the steps of:
(a) admixing the surface-modified silica with water and ultrasonicating the surface-modified silica and water to produce a silica solution;
(b) admixing the silica solution with the rubber latex to obtain a second solution; and
(c) removing water from the second solution to obtain a masterbatch material.

In a preferred aspect, ultrasonication is conducted at room temperature. In another aspect, ultrasonication is conducted for from 5 min to 30 min, or for 5 min to 25 min, or for 10 min to 20 min, or for 5, 10, 15, 20, 25, or 30 min.

In another preferred aspect, step (b) includes mechanical mixing, relatively high shear mixing, another means of mixing, or any combination thereof. **In** another aspect, step (b) is carried out for from 10 min to 60 min, or for from 10 min to 45 min, from 15 min to 30 min, or for 10, 15, 20, 25, 30, 35, 40, 45, 50, 55, or 60 min.

In a preferred aspect, the silica solution contains from 10 parts by weight to 30 parts by weight of the surface-modified silica, or from 10 parts by weight to 25 parts by weight, or from 15 parts by weight to 20 parts by weight, or 10, 15, 20, 25, or 30 parts by weight of the surface-modified silica. In a further aspect, the silica solution contains 150 parts by weight water.

In another preferred aspect, step (c) can be conducted using a screen, a press, rolling, extruding, or any combination thereof, or any other method for removing water as known in the art.

Also disclosed are masterbatch materials produced by the disclosed process and uncured rubber compositions including the masterbatch. An exemplary process to produce the masterbatch material is shown in FIG. 1. Furthermore, herein are disclosed cured rubber compositions including the uncured rubber compositions following performance of a curing step. Each component of the rubber compositions is described in more detail below.

### Masterbatch Materials

In a preferred aspect, the disclosed masterbatch materials include natural rubber latex, emulsion styrene butadiene rubber (eSBR), or any combination thereof. In an aspect, when the masterbatch material includes natural rubber latex, the natural rubber latex can be selected from guayule rubber latex, Taraxacum kok-saghyz (TKS) rubber latex, Russian dandelion rubber latex, or any combination thereof.

In another preferred aspect, an emulsion polymerized styrene/butadiene (eSBR) can be used, wherein the eSBR has a styrene content of from 5 percent to 50 percent, or from 8 to 28 percent bound styrene. In a further aspect, by eSBR, it is meant that styrene and 1,3-butadiene are copolymerized as an aqueous emulsion.

In a preferred aspect, a reference to glass transition temperature, or T_{g}, of an elastomer or elastomer composition, when used herein, represents the glass transition temperature(s) of the respective elastomer or elastomer composition in its uncured state or, in the case of an elastomer composition, in some aspects, T_{g} can be measured in a cured state. T_{g} is determined as a peak midpoint by a differential scanning calorimeter (DSC) using ASTM D7426 or equivalent.

In another preferred aspect, the masterbatch material can be used immediately after preparation or stored for later use. In any of these aspects, the masterbatch material does not separate for at least 1 hour, at least 6 hours, at least 12 hours, or at least 24 hours in storage after preparation.

### Surface-Modified Silicas and Preparation Thereof

In a preferred aspect, numerous examples of surface-modified silicas are contemplated herein and should be considered disclosed. **In** one aspect, the surface-modified silica includes fewer surface-exposed hydrogen bonding groups, such as hydroxyl groups, than an otherwise identical but untreated silica. **In** an aspect, the surface-modified silica can be chemically-modified or can be physically-modified (e.g., by non-covalent interactions), or both.

In some preferred aspects, the surface-modified silica includes a surface modification incorporating one or more silanes. In a further aspect, the one or more silanes can be selected from triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)-triethoxysilane, S-(octanol)mercaptopropyltriethoxysilane, bis[3-(triethoxysilyl)-propyl]disulfide, bis[3-(triethoxysilyl)propyl]tetrasulfide, triethoxyallylsilane, or any combination thereof.

In a preferred aspect, the surface-modified silica includes a surface modification incorporating a surfactant, a hydrophobic polymer film, a silane-containing coupling agent and an ethoxylated alcohol ether, or any combination thereof. In one aspect, the hydrophobic polymer film can be or include 1,7-octadiene. **In** another aspect, the surfactant can be stearic acid.

In a preferred aspect, an untreated silica is used to produce the surface-modified silica described herein. In a further aspect, the untreated silica can be a prewashed, wet filter cake of precipitated silica having hydroxyl groups thereon. **In** a further aspect, the precipitated silica can be derived from rice husk ash or bagasse (sugar cane) ash, or the like, and need not be dried following washing and filtration of an acid-treated sodium silicate.

In a preferred aspect, the untreated silica can have a particle size of less than 10 micrometers (µm), or less than 5 µm, or less than 0.1 µm, as determined by ASTM C721-20, "Standard Test Methods for Estimating Average Particle Size of Alumina and Silica Powders by Air Permeability." (Silica primary particles for rubber usage are usually in the 10 to 100 nanometer range, 0.01 to 0.1 micrometers) as measured by Differential Centrifugal Sedimentation (DCS).

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica can be used in the method. In other embodiments, the untreated precipitated silica is prepared as a wet filtered material shortly before use.

In some preferred aspects, an organosilane or silane-containing coupling agent is used to produce a surface-modified silica described herein. In a further aspect, the silane-containing coupling agent can be selected from 3-mercaptopropyltriethoxysilane, S-[3-(triethoxysilyl)propyl]octanethioate, bis(trialkoxysilylalkyl) polysulfide, a bis(alkoxyaryl-oxysilylalkyl) polysulfide, a bis(triaryloxysilylalkyl) polysulfide, or any combination thereof.

An illustrative coupling agent includes one or more alkoxy groups, such as a methoxy group or an ethoxy group (or groups), bonded directly to a silicon atom. In such coupling agents the alkoxy group hydrolyzes in the presence of moisture typically found on the surface of the silica to form the corresponding silanol which reacts with or condenses in the presence of the silica surface to bond the silicon atom to the silica surface. An organic group or groups attached to the silicon atom is/are thus available for chemical reaction with the polymer matrix during vulcanization. As a result, the polymer matrix may become chemically bonded to the silica particle, by means of the coupling agent, e.g., during cure or vulcanization of the polymer.

In a preferred aspect, the amount of the silane coupling agent used to form the surface-modified silica can be at least 0.01 parts by weight per hundred parts by weight of filler ("phf," here, the untreated silica). In some embodiments, the amount of silica coupling agent may be at least 1 phf, or at least 2 phf, or at least 5 phf, or at least 8 phf, or at least 10 phf, or up to 50 phf, or up to 15 phf of the untreated precipitated silica. (2 to 15 PHF) In one aspect, a ratio, by weight, of the coupling agent to the alcohol ether may be at least 0.8:1 or at least 1:1, or at least 1.2:1 or up to 3:1. (.8 to 1 up to 10 to 1) In an aspect, since the coupling agent and alcohol ether are retained on the silica when the mixture is spray dried, the amount of each and the phf can readily be determined from the amounts of coupling agent and alcohol ether added to the slurry and the dry weight of the surface-modified silica product.

In another preferred embodiment, the masterbatch materials described herein include the surface-modified silica in an amount of at least 10 phr, or at least 20 phr, or at least 50 phr, or up to 130 phr, or up to 120 phr, or up to 110 phr, or up to 100 phr. Put another way, the pretreated silica can be at least 2 wt %, or at least 5 wt %, or at least 10 wt %, or at least 20 wt %, or up to 60 wt %, or up to 40 wt % of the fully-formulated rubber composition.

### Additional Components

In a preferred aspect, reinforcing fillers, other than or in addition to carbon black and the surface-modified silica, can be present in the rubber compositions described herein at no more than 10 phr. In a further aspect, the processing aid(s) used in forming the rubber composition may include at least one of a resin, a wax, and a liquid plasticizer. In an aspect, the cure package can include a sulfur-based vulcanizing agent and at least one of a cure accelerator, a cure activator, and a cure inhibitor. In another aspect, the cure package can include a peroxide-based vulcanizing agent. In another aspect, the rubber composition can further include at least one of an antioxidant, an antidegradant, and an antiozonant. In some aspects, a tire and/or tire tread can be formed from the rubber composition.

In a preferred aspect, the rubber composition includes 100 phr of vulcanizable elastomers; at least 5 phr of the pretreated silica; optionally, one or more other reinforcing fillers, one or more processing aids, and a sulfur-containing cure package.

In some preferred aspects, the rubber composition can include up to 100 phr of a processing oil. In one embodiment, the amount of processing oil ranges from 1 phr to 40 phr. In an alternative embodiment, the rubber composition is devoid of processing oil. In a further aspect, processing oil can be included in the rubber composition as extending oil typically used to extend elastomers, or by addition of the oil directly during rubber compounding. In some aspects, the processing oil used can include both extending oil present in the elastomers and processing oil added during compounding. In a further aspect, suitable process oils include various oils as are known in the art, including aromatic, paraffinic, naphthenic, and low PCA oils, such as MES, TDAE, and heavy naphthenic oils, and vegetable oils such as sunflower, soybean, and safflower oils.

In a preferred aspect, the rubber composition can include a low PCA oil. Suitable low PCA oils include, but are not limited to, mild extraction solvates (MES), treated distillate aromatic extracts (TDAE), and heavy naphthenic oils as known in the art. Generally, suitable low PCA oils include those having a glass transition temperature T_{g} in a range of from -20 °C to -80 °C. MES oils generally have a T_{g} in a range of from -57 °C to -63 °C. TDAE oils generally have a T_{g} in a range of from -44 °C to -50 °C. Heavy naphthenic oils generally have a T_{g} in a range of from -42 °C to -48 °C. A suitable measurement for T_{g} of TDAE oils is DSC according to ASTM E1356, or an equivalent.

In one aspect, suitable low PCA oils include those having a polycyclic aromatic content of less than 3 percent by weight as determined by the IP 346 method. Procedures for the IP346 method may be found in Standard Methods for Analysis and Testing of Petroleum and Related Products and British Standard 2000 Parts, 2003, 62nd edition, published by the Institute of Petroleum, United Kingdom.

Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils can be available as the oil alone or along with an elastomer in the form of an extended elastomer. Suitable vegetable oils include, for example, soybean oil, sunflower oil, and canola oil which are in the form of esters containing a certain degree of unsaturation.

In a preferred aspect, the disclosed rubber composition can include from 50 phr to 150 phr of silica (i.e., untreated silica that does not include the surface-modified silica as described herein). In some aspects, precipitated silicas are preferred such as, for example, those obtained by the acidification of a soluble silicate, e.g., sodium silicate. In one aspect, such conventional silicas might be characterized, for example, by having a BET surface area, as measured using nitrogen gas, preferably ranging from 40 square meters per gram to 600 square meters per gram, or from 50 square meters per gram to 300 square meters per gram. In another aspect, the conventional silica can also be typically characterized by having a dibutylphthalate (DBP) absorption value from 100 to 400, or from 150 to 300.

The conventional silica is expected to have an average ultimate particle size, for example, in the range of 0.01 micron to 0.05 micron as determined by the electron micro-scope, although the silica particles can have larger or smaller diameters in some aspects.

Various commercially available silicas may be used, such as, only for example herein, and without limitation, silicas commercially available from PPG Industries under the Hi-Sil trademark with designations 210, 243 and 315; silicas available from Rhodia, with, for example, designations of Z1 165MP and Z165GR; and silicas available from Degussa AG with, for example, designations VN2 and VN3.

In a preferred aspect, the rubber composition can optionally include from 1 phr to 70 phr of carbon black. Commonly employed carbon blacks can be used as a conventional filler. Representative examples of such carbon blacks include NII0, N121, N134, N220, N231, N234, 55 N242, N293, N299, 5315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 g/kg to 145 g/kg and DBP numbers ranging from 34 cm³/100 g to 150 cm³/100 g.

Other fillers can be used in the rubber composition including, but not limited to, particulate fillers including ultra-high molecular weight polyethylene (UHMWPE), particulate polymer gels, and plasticized starch composite filler.

### Preparation of Rubber Compositions and Applications Thereof

It is readily understood by those having skill in the art that the disclosed rubber compositions can be compounded by methods generally known in the rubber compounding art, such as mixing the various sulfur-vulcanizable constituent rubbers with various commonly used additive materials such as, for example, sulfur donors, curing aids, such as activators and retarders, fillers, pigments, fatty acid, zinc oxide, waxes, antioxidants and antiozonants, and peptizing agents. As known to those skilled in the art, depending on the intended use of the sulfur vulcanizable and sulfur-vulcanized material (rubbers), the additives mentioned above are selected and commonly used in conventional amounts.

Representative examples of sulfur donors include elemental sulfur (free sulfur), an amine disulfide, polymeric polysulfide, and sulfur olefin adducts. In one embodiment, the sulfur-vulcanizing agent is elemental sulfur. The sulfur-vulcanizing agent can be used in an amount ranging from 0.5 phr to 8 phr, or from 1.5 phr to 6 phr. Typical amounts of antioxidants can be from 1 phr to 5 phr. Representative antioxidants can be, for example, diphenyl-p-phenylenediamine and others. Typical amounts of antiozonants can be from 1 phr to 5 phr. Typical amounts of fatty acids, if used, can be from 0.5 phr to 3 phr. In one aspect, useful fatty acids include, but are not limited to, stearic acid. Typical amounts of zinc oxide can be from 2 phr to 5 phr. Typical amounts of waxes can be from 1 phr to 5 phr. Often microcrystalline waxes are used. Typical amounts of peptizers can be from 0.1 phr to 1 phr. Typical peptizers may be, for example, pentachlorothiophenol and dibenzamidodiphenyl disulfide.

In some preferred aspects, accelerators can be used to control the time and/or temperature required for vulcanization and to improve the properties of the vulcanizate. In one embodiment, a single accelerator system can be used, i.e., primary accelerator. The primary accelerator(s) can be used in total amounts ranging from 0.5 phr to 4 phr, or from 0.8 phr to 1.5 phr. In another embodiment, combinations of a primary and a secondary accelerator can be used with the secondary accelerator being used in smaller amounts, such as from 0.05 phr to 3 phr in order to activate and to improve the properties of the vulcanizate. Combinations of these accelerators might be expected to produce a synergistic effect on the final properties and may perform better than those rubbers produced by use of either accelerator alone. In an additional aspect, delayed action accelerators can be used; these are not affected by normal processing temperatures, but produce a satisfactory cure at ordinary vulcanization temperatures.

In some preferred aspects, vulcanization retarders can also be used. Suitable types of accelerators that can be used in the present invention are amines, disulfides, guanidines, thioureas, thiazoles, thiurams, sulfonamides, dithiocarbamates, and xanthates. In one embodiment, the primary accelerator is a sulfonamide. If a second accelerator is used, the secondary accelerator can be a guanidine, dithiocarbamate, or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage, which is conventionally called the "productive" mix stage in which the mixing typically occurs at a temperature, or ultimate temperature, lower than the mix temperature(s) than the preceding non-productive mix stage(s).

In some aspects, the rubber composition can be subjected to a thermomechanical mixing step. The thermomechanical mixing step generally includes a mechanical working in a mixer or extruder for a period of time suitable in order to produce a rubber temperature between 140 °C and 190 °C. The appropriate duration of the thermomechanical working varies as a function of the operating conditions and the volume and nature of the components. For example, the thermomechanical working may be from 1 minute to 20 minutes.

In a further preferred aspect, the rubber composition can be incorporated in a variety of rubber components of a tire. For example, the rubber component can be a tread (including tread cap and tread base), sidewall, apex, chafer, sidewall insert, wirecoat, or innerliner. In one embodiment, the component is a tread. The pneumatic tire of the present invention may be a race tire, passenger tire, aircraft tire, agricultural, earthmover, off-the-road or truck tire. In a preferred embodiment, the tire is a passenger or truck tire. The tire can also be a radial or bias.

Vulcanization of the disclosed pneumatic tires is generally carried out at conventional temperatures ranging from 100 °C to 200 °C, or from 110 °C to 180 °C. Such tires can be built, shaped, molded and cured by various methods which are known and will be readily apparent to those having skill in such art.

Now having described the aspects of the present invention, in general, the following Examples describe some additional aspects of the present invention.

### EXAMPLES

The following examples are put forth so as to provide those of ordinary skill in the art with a complete invention and description of how the compounds, compositions, articles, devices and/or methods claimed herein are made and evaluated, and are intended to be exemplary of the invention. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric.

### Example 1: Method for Making a Masterbatch Material

In a control experiment, 20 g of a chemically-treated silica was added to 150 g of deionized water. The mixture was shaken for 1 h at room temperature. The turbid liquid was allowed to stand for 5 min and was found to have settled.

In another experiment, 20 g of chemically-treated silica was added to 150 g of deionized water. The mixture was subjected to ultrasonic vibration for 10 min at room temperature. A milk-like solution was formed that was stable and did not separate for at least one day.

### Example 2: Rubber Compositions and Preparation of the Same

A stable, ultrasonicated, milk-like solution from Example 1 was mixed thoroughly with natural rubber latex using mechanical mixing, high shear mixing, or using another means. This composition was sent to a stripping unit to remove water and/or dry, creating a masterbatch. An overview of the process is shown in FIG. 1. Natural rubber/silica masterbatch materials self-coagulated after 10 minutes of mechanical mixing.

### Example 3: Preparation of Cured Rubbers and/or Rubber Articles

The rubber compositions were prepared by mixing in a Banbury mixer. Initial mixing stages included the masterbatches as disclosed herein. In the traditional (control) mix, the natural rubber and silica and other rubber compounding ingredients, not including sulfur based rubber cure agents, were mixed in at least one step usually referred to as a "non-productive" mixing stage to an elevated temperature under high shear rubber mixing conditions, followed by a final "productive" mixing step, or stage, in which a sulfur based cure package, such as sulfur and sulfur cure accelerators, was added and mixed therewith at a lower mixing temperature to avoid unnecessarily pre-curing the rubber mixture during the mixing stage.

## Claims

1. A method for making a masterbatch material comprising a surface-modified silica and rubber latex, the method comprising:
(a) admixing the surface-modified silica with water and ultrasonicating the surface-modified silica and water to produce a silica solution;
(b) admixing the silica solution with the rubber latex to obtain a second solution; and
(c) removing water from the second solution to obtain a masterbatch material; wherein the surface-modified silica comprises fewer surface-exposed hydrogen bonding groups than an otherwise identical unmodified silica.

2. The method of claim 1, wherein the surface-modified silica comprises a surface modification comprising one or more silanes, the one or more silanes preferably comprising triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)-triethoxysilane, S-(octanol)mercaptopropyltriethoxysilane, bis[3-(triethoxysilyl)-propyl]disulfide, bis[3-(triethoxysilyl)propyl]tetrasulfide, triethoxyallylsilane, or any combination thereof.

3. The method of at least one of the previous claims, wherein the surface-modified silica comprises a surface modification comprising a surfactant, a hydrophobic polymer film, a silane-containing coupling agent and an ethoxylated alcohol ether, or any combination thereof.

4. The method of at least one of the previous claims, wherein the silane-containing coupling agent comprises 3-mercaptopropyltriethoxysilane, S-[3-(triethoxysilyl)propyl]octan-ethioate, bis(trialkoxysilylalkyl) polysulfide, a bis(alkoxyaryloxysilylalkyl) polysulfide, a bis(triaryloxysilylalkyl) polysulfide, or any combination thereof.

5. The method of at least one of the previous claims, wherein the hydrophobic polymer film comprises plasma polymerized 1,7-octadiene, and/or wherein the surfactant comprises stearic acid.

6. The method of at least one of the previous claims, wherein ultrasonication is conducted for from 5 min to 30 min, preferably at room temperature.

7. The method of at least one of the previous claims, wherein step (b) comprises mechanical mixing, relatively high shear mixing, or any combination thereof; and/or wherein step (b) is conducted for from 10 min to 60 min.

8. The method of at least one of the previous claims, wherein the silica solution comprises from 10 parts by weight to 30 parts by weight of the surface-modified silica and 150 parts by weight water.

9. The method of at least one of the previous claims, wherein step (c) comprises dewatering using a screen, a press, rolling, extruding, or any combination thereof.

10. The method of at least one of the previous claims, wherein the masterbatch material does not separate for at least 24 h when stored.

11. A masterbatch material produced by the process of at least one of the previous claims, the masterbatch material preferably comprising from 10 phr to 130 phr of silica particles.

12. The masterbatch material of claim 11, wherein the rubber latex comprises natural rubber latex, emulsion styrene butadiene rubber (eSBR), or any combination thereof, the natural rubber latex, if used, preferably comprising guayule rubber latex, Taraxacum kok-saghyz (TKS) rubber latex, Russian dandelion rubber latex, or any combination thereof.

13. An uncured rubber composition comprising the masterbatch material of claim 11 or 1

14. A cured rubber composition comprising the uncured rubber composition of claim 13 following performance of a curing step.

15. An article or tire comprising the cured rubber composition of claim 14.
